# EUROPEAN PATENT APPLICATION

(11) **EP 1 921 021 A1**
(43) Date of publication of application: **14.05.2008**
(21) Application number: 07119623.2
(22) Date of filing: 30.10.2007
(51) Int. Cl.: B65D 71/00, B65D 75/00, B29C 65/00, B29C 69/00

(54) **Stretch film particularly for palletizing and method for manufacturing the film**

(30) Priority: 10.11.2006 IT PD20060414
(71) Applicant: Tiozzo Gobetto, Eugenio, 30015 Chioggia (VE) (IT)
(72) Inventor: Tiozzo Gobetto, Eugenio, 30015 Chioggia (VE) (IT)
(74) Representative: Modiano, Micaela Nadia

(57) **Abstract**

A stretch film particularly for palletizing, constituted by strips (11, 12, 111, 112) of plastic film (15) which are arranged side-by-side and are contoured so as to have regions (13, 113) where their edges overlap the adjacent edges of the nearby strips; the joining of the overlap regions (13, 113) allows to form the film (10).

## Description

The present invention relates to a stretch film particularly for palletizing.

The invention also relates to a method for manufacturing a stretch film particularly for palletizing.

Perforated and reinforced stretch films made of plastics are currently used and widespread and are used for example in wrapping boxes stacked on pallets which contain products which need air circulation to preserve their properties optimally, such as horticultural products or products which have been pasteurized and therefore tend to release steam which must not be accumulated to form condensation.

These known perforated stretch films are constituted generally by a longitudinally elongated film made of extensible plastic material provided with longitudinally elongated reinforcement elements which are equidistant and likewise extensible and with ventilation holes or slits between two nearby reinforcement elements.

These films are subjected to longitudinal stretching during use, i.e., when they are unwound from a roll to wrap them around a pallet or another set of products; this longitudinal stretching operation increases its tensile strength in the stretching direction.

These films are usually sold by length or weight and their increasing use clashes with the continuing rise of the cost of raw materials.

The use of strips of extensible plastic material as reinforcement elements is a very important cost factor for these known films, and the equipment needed to fix these strips to the base film is also onerous.

However, in these known types of film the use of these strips is necessary because the perforation of the film leads to the formation, at the holes, of imperfections which despite being small constitute true tear-promoting elements during film stretching.

Further, the presence of these reinforcement strips, which are generally arranged along straight lines, forces a certain offset in an axial direction of the film during winding operations, so as to prevent said reinforcement strips from being wound onto each other, which would increase undesirably the volume of the reel of film in a radial direction; however, this offset entails an increase in the axial dimensions of the reel.

The aim of the present invention is to provide a method for manufacturing a stretch film particularly for palletizing, for producing films which, for an equal width and length, are lighter than known types of film.

Within this aim, an object of the present invention is to provide a stretch film particularly for palletizing which is manufactured with said method.

Another object of the present invention is to provide a film whose characteristics are at least equal to those of similar known films.

Another object of the invention is to provide a stretch film whose manufacture does not generate tear-promoting elements.

Another object of the present invention is to provide a film which, for equal dimensions, can be provided with a smaller amount of raw material with respect to known types of film.

Another object of the present invention is to provide a film which tends to shrink less in a transverse direction than known films.

Another object of the present invention is to provide a method for manufacturing a stretch film particularly for palletizing and a film provided with such method which can be produced with known systems and technologies.

This aim and these and other objects which will become better apparent hereinafter are achieved by a stretch film particularly for palletizing, characterized in that it is constituted by strips of plastic film which are arranged side-by-side and are contoured so as to have regions where their edges overlap the adjacent edges of the nearby strips, said overlap regions being designed to provide mutual joining to form the film.

Further characteristics and advantages of the invention will become better apparent from the following detailed description of two preferred but not exclusive embodiments thereof, illustrated by way of non-limiting example in the accompanying drawings, wherein:
Figure 1 is a view of a first step of a method for manufacturing a film according to the invention;
Figure 2 is a view of a film according to the invention in the non-stretched condition;
Figure 3 is a schematic view of an apparatus for providing a film according to the invention;
Figure 4 is a view of a film according to the invention in the longitudinally stretched condition;
Figure 5 is a view of a different embodiment of a film according to the invention.

With reference to the figures, a stretch film according to the invention is generally designated by the reference numeral 10.

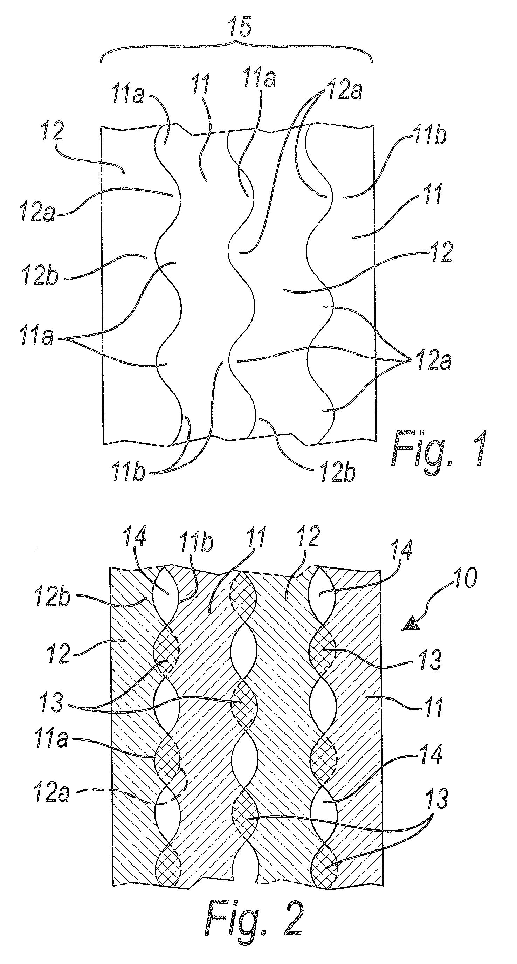

The stretch film 10, shown in finished condition in Figure 2, is constituted by strips 11 and 12 made of plastic film which are arranged side-by-side and are contoured so as to have regions 13 where their edges overlap the adjacent edges of the nearby strips.

The joint of the edges that overlap in the overlap regions 13 forms the film 10.

The overlap regions 13 are alternated with non-overlapping regions, which form ventilation openings 14 designed for the flow of air and moisture toward and from the material packaged with the film 10.

Each of the strips 11 and 12 arranged side-by-side has longitudinal edges contoured as a succession of concave and convex portions 11 a and 11b for the first strips 11 and 12a and 12b for the second strips 12.

The superimposed concave portions 11a and 12a provide the regions 13 designed to overlap the corresponding concavities of the strips arranged side-by-side.

In particular, for the first embodiment described here by way of non-limiting example of the invention, the succession of concave and convex portions forms a zigzag or undulated profile for the edges of the strips 11 and 12.

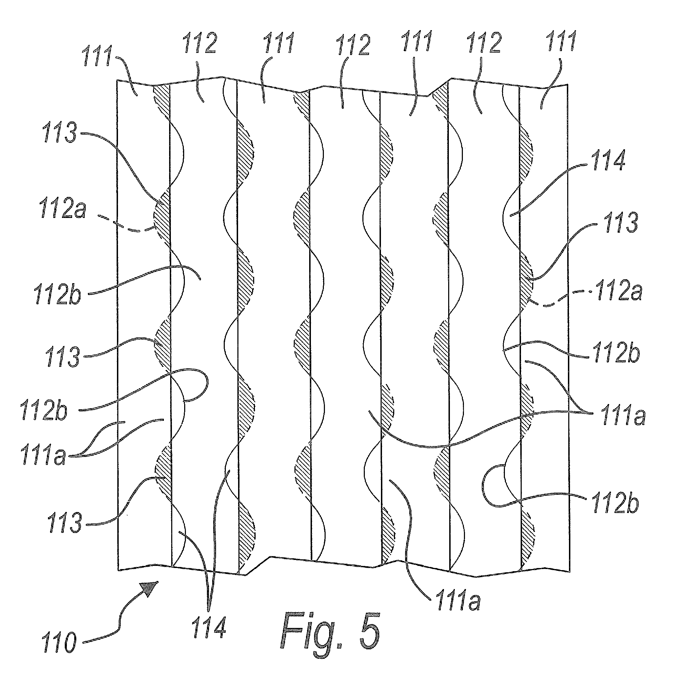

In a different embodiment, shown by way of example in Figure 5, the film 110 according to the invention is provided by means of first strips 111 with straight edges alternated with second strips 112 with edges which are contoured as a succession of concave portions 112a and convex portions 112b; as in the first embodiment described above, the concave portions 112a are designed to overlap the straight edges 111a of the laterally adjacent strips 111; the convex regions 112b instead form, together with the adjacent straight edges 111a, the openings 114 for the air.

The present invention also relates to a method for providing a stretch film particularly for palletizing, comprising the steps of:
- providing two series of strips 11 and 12 or 111 and 112, as described above, so that the strips of at least one series have a succession of concave and convex portions, said concave portions forming regions which are designed to overlap the edges of the strips arranged side by side,
- arranging the strips of the two side-by-side series so as to alternate a strip of a first series with a strip of a second series, so that the concave portions of one series of strips overlap the edges of the other series of strips,
- mutually fixing said overlap regions.

As regards the embodiment of the invention shown in Figure 2, the operation of providing two series of strips 11 and 12 is provided by the cutting of a film 15 made of plastic material into strips, indeed 11 and 12, so that the longitudinal edges of the strips are contoured like a succession of concave portions 11a and 12a and convex portions 11b and 12b.

The arrangement of the strips 11 and 12 provided by cutting a same film 15 is achieved by offsetting a first series of strips 11 with respect to the adjacent strips 12, which are alternated with the first strips and form the second series of strips.

The offset is such that the concave portions 11a of the strips 11 of the first series and the concave portions 12a of the strips 12 of the second series form the overlap regions 13.

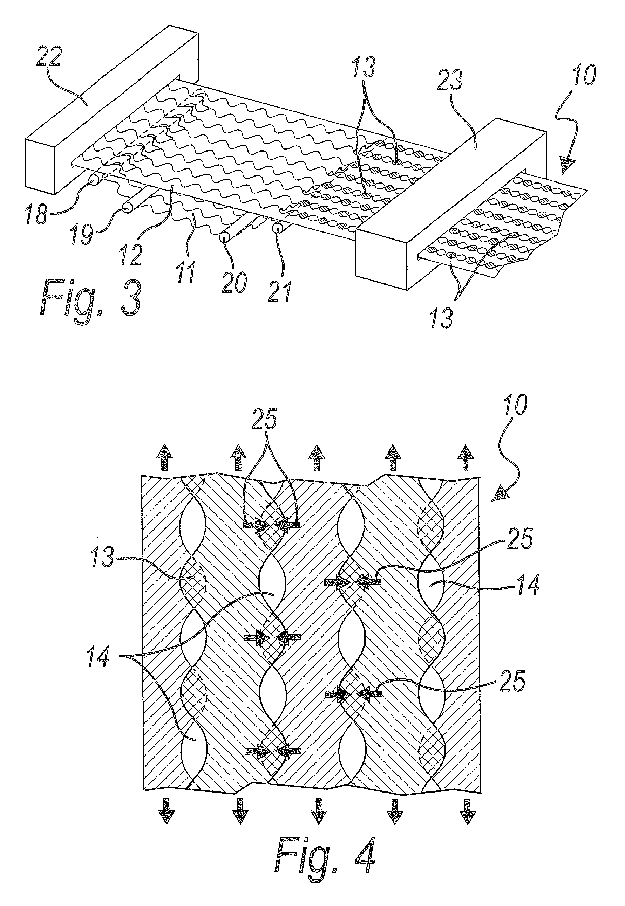

This offset operation can be performed for example by using rollers 18, 19, 20 and 21, as shown schematically by way of example in Figure 3; the first roller 18 receives the film 15 which has just exited from the cutting machine 22, and the strips 11 of the first series are diverted downward (or upward) by the first roller 18 and wind around a second roller 19 and a third roller 20; they converge from the third roller 20 toward a fourth roller 21, at which they are paired again with the strips 12 of the second series, which in the meantime have traced a straight path without redirections.

The path traced by the first strips 11 is longer by an extent which allows the overlap of the corresponding concave portions 11a and 12a when they join the second strips 12.

The operation for mutually fixing the overlap regions 13 is provided for example by heat-sealing by means of an appropriately provided machine, designated schematically in Figure 3 by the reference numeral 23.

This operation for mutually fixing the overlap regions 13 can be performed alternately by spot gluing.

The heat-sealing operation, cited here by way of example, is provided so as to not entail complete melting of the two parts, but a joint such that each individual strip retains its mechanical capacities.

In a different embodiment of the method according to the invention, the operation for providing two series of strips 111 and 112, for the production of the film 110 shown by way of example in Figure 5, consists in cutting two separate films, not a single one, into strips 111 and 112; a first film is cut into strips with straight edges 111a and a second film is cut into strips with longitudinal edges which are contoured as a succession of concave portions 112a and convex portions 112b.

The arrangement of the strips provided by cutting two films is achieved by arranged alternately side-by-side the first strips 111, taken from the first film, and the second strips, taken from the second film 112, so that the straight edges 111a of the first strips 111 and the concave portions 112a of the second strips 112 form overlap regions 113.

In both embodiments of the method according to the invention, the operation for fixing the overlap regions 13 and 113 can be followed by an operation for stretching the film 10 and 110 longitudinally.

Figure 4 illustrates by way of example the stretched film 10.

The arrows 25 show that the typical phenomenon of transverse contraction of the stretched film is at least partly mitigated by the alternation of the overlap regions 13, which are joining regions, with the openings 14, both in the transverse direction and in the longitudinal direction of the film.

The film 10 in fact reacts to the stretching stress not only by elongating but also by means of the transverse widening of the openings 14; the alternating distribution of overlap regions 13 and openings 14 is such that the deformation arrows 25 tend to balance each other.

Further, the openings 14 and 114, differently from known types of perforated and reinforced film, are not provided by means of operations for removing or heat-shrinking a portion of the film, but by the side-by-side and partly overlapping arrangement of strips 11, 12, 111 and 112 which are conveniently shaped, as shown, so as to form openings, so that each strip cooperates with part of the profile of the edge in forming an opening 14 or 114.

In this manner, the risk of generating tear-promoting elements is reduced considerably and the ultimate tensile strength of the film 10 without longitudinal reinforcement elements is not lower than the ultimate tensile strength of known types of reinforced film.

Further, the stress to orient the polymers in a longitudinal direction, caused by the stretching operation, is limited to each single strip separately from the others and does not involve a single continuous film as in known types of film.

Therefore, each strip undergoes a constriction which substantially propagates minimally, or not at all, to the nearby strips, which are fixed to each other but not so intimately as to entail, at the overlap and joining regions 13, simultaneous and equal stretching of the adjacent strips.

In practice it has been found that the invention thus described solves the problems noted in known types of reinforced perforated stretch film.

In particular, the present invention provides a stretch film particularly for palletizing for producing films which, for an equal width and length, have a lower weight than known types of film; indeed there are no longitudinally elongated strips or other reinforcement elements; the overlap regions 13 form joining portions whose mechanical properties allow to have usefulness and practicality characteristics which are not inferior to those of known reinforced films.

Therefore, an object achieved with the present invention is to provide a film which, for equal dimensions, can be produced with a smaller amount of raw material than known types of film.

Moreover, the present invention provides a method for manufacturing such a stretch film particularly for palletizing.

Further, the present invention provides a film which tends to contract in a transverse direction less than known films.

Moreover, the present invention provides a film which, by way of its overlap and reinforcement regions which are alternated transversely and longitudinally, can be wound onto a reel without requiring offsets in an axial direction, allowing to produce reels which are more compact both axially and radially.

Not last, the present invention provides a stretch film and a method for manufacturing it, which are both obtainable at a low cost with known equipment and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2006A000414 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A stretch film particularly for palletizing, **characterized in that** it is constituted by strips (11, 12, 111, 112) of plastic film (15) which are arranged side-by-side and are contoured so as to have regions (13, 113) where their edges overlap the adjacent edges of the nearby strips, said overlap regions (13, 113) being designed to provide mutual joining to form the film (10, 110).

2. The film according to claim 1, **characterized in that** said overlap and joining regions (13, 113) are alternated with region with no overlap, which form ventilation openings (14, 114) designed for the passage of air and moisture toward and from the material packaged with said film (10, 110).

3. The film according to the preceding claims, **characterized in that** each one of said side-by-side strips (11, 12) has longitudinal edges which are contoured as a succession of concave portions (11a, 12a) and convex portions (11b, 12b), said concave portions (11a, 12a) providing the regions designed for overlap with respect to the corresponding concave portions of the laterally adjacent strips.

4. The film according to the preceding claim, **characterized in that** said succession of concave portions (11a, 12a) and convex portions (11b, 12b) forms an undulated profile for the edges of the strips.

5. The film according to claims 1 and 2, **characterized in that** it is provided by means of first strips (111) with straight edges (111a) alternated with second strips (112) with edges which are contoured as a succession of concave portions (112a) and convex portions (112b), said concave portions (112a) being designed to overlap the straight edges (111a) of the laterally adjacent strips (111), the convex portions (112b) forming, with the nearby straight edges (111a), said openings (114).

6. A method for providing a stretch film particularly for palletizing, according to claims 1 to 5, comprising the steps of:
- providing two series of strips (11, 12, 111, 112) so that the strips of at least one series have a succession of concave portions (11a, 12a, 112a) and convex portions (11b, 12b, 112b), said concave portions forming regions designed to overlap the edges of the laterally adjacent strips,
- arranging the strips of the two side-by-side series so as to alternate a strip of a first series and a strip of a second series, so that the concavities of a series of strips overlap the edges of the other series of strips so as to form overlap regions (13, 113),
- mutually fixing said overlap regions (13, 113).

7. The method according to claim 6, **characterized in that** said operation for providing two series of strips (11, 12) consists in cutting a film (15) made of plastic material into strips (11, 12) so that the longitudinal edges of said strips (11, 12) are shaped like a series of concave portions (11a, 12a) and convex portions (11b, 12b).

8. The method according to claims 6 and 7, **characterized in that** the arrangement of the strips (11, 12) provided by cutting a same film (15) is achieved by offsetting a first series of strips (11) with respect to the adjacent strips (12), which are alternated with the first ones and form the second series of strips, so that the concave portions (11a) of the strips (11) of the first series and the concave portions (12a) of the strips (12) of the second series form the overlap regions (13).

9. The method according to one or more of claims 6 to 8, **characterized in that** said operation for mutually fixing said overlap regions (13) is provided by heat-sealing.

10. The method according to one or more of claims 6 to 8, **characterized in that** said operation for mutually fixing said overlap regions (13) is provided by spot gluing.

11. The method according to claim 6, **characterized in that** said operation for providing two series of strips (111, 112) is provided by cutting two films of plastic material into strips, a first film into strips (111) which have straight edges (111a) and a second film into strips (112) which have longitudinal edges shaped like a succession of concave portions (112a) and convex portions (112b).

12. The method according to claims 6 and 11, **characterized in that** the arrangement of the strips provided by cutting two films is achieved by arranging side by side alternately first strips (111) taken from the first film and second strips (112) taken from the second film, so that the straight edges (111a) of the first strips (111) and the concave portions (112a) of the second strips (112) form overlap regions (113).

13. A method for providing a stretch film particularly for palletizing, comprising the steps of:
- cutting a film of plastic material into strips (11, 12) so that longitudinal edges of said strips (11, 12) are shaped like a succession of concave portions (11a, 12a) and convex portions (11b, 12b),
- offsetting a first series of strips with respect to adjacent strips, which are alternated with the first ones and form a second series of strips, so that the concave portions (11a) of the strips (11) of the first series and the concave portions (12a) of the strips (12) of the second series form overlap regions (13),
- mutually fixing said overlap regions.

14. A method for providing a stretch film particularly for palletizing, comprising the steps of:
- cutting two films of plastic material into strips (111, 112), a first film into strips (111) with straight edges (111a), a second film into strips (112) with longitudinal edges which are shaped like a succession of concave portions (112a) and convex portions (112b),
- alternately arranging side-by-side first strips (111) taken from the first film and second strips (112) taken from the second film, so that the straight edges (111a) of the first strips (111) and the concave portions (112a) of the second strips (112) form overlap regions (113),
- mutually fixing said overlap regions.

15. The method according to claims 6-14, **characterized in that** said operation for fixing the overlap regions (13, 113) is followed by an operation for stretching the film (10, 110) longitudinally.
